# FASCICULE DE BREVET EUROPEEN

(11) **EP 1 815 486 B1**
(45) Date de publication et mention de la délivrance du brevet: **14.03.2012**
(21) Numéro de dépôt: 05818285.8
(22) Date de dépôt: 21.11.2005
(51) Int. Cl.: H01G 2/04, H01G 9/008

(54) **SYSTEME DE CONNEXION ENTRE BATTERIES DE CONDENSATEURS**
VERBINDUNGSSYSTEM ZWISCHEN KONDENSATOR-BATTERIEN
CONNECTION SYSTEM BETWEEN CAPACITOR BATTERIES

(30) Priorité: 22.11.2004 FR 0412385; 07.03.2005 FR 0502282
(43) Date de publication de la demande: 08.08.2007
(73) Titulaire: Semikron, 78500 Sartrouville (FR)
(72) Inventeur: ALLAIN, Briag, F-78100 SAINT GERMAIN EN LAYE (FR); LEBRETON, Philippe, F-95870 BEZONS (FR); SARGOS, Jean, Frédéric, F-92150 SURESNES (FR)
(74) Mandataire: Littolff, Denis
(86) Numéro de dépôt international: PCT/FR2005/002890
(87) Numéro de publication internationale: WO 2006/053995

(56) Documents cités:
- EP-A- 0 450 122
- EP-A- 1 339 077
- PATENT ABSTRACTS OF JAPAN vol. 013, no. 463 (E-833), 19 octobre 1989 (1989-10-19) & JP 01 181405 A (SUMITOMO ELECTRIC IND LTD), 19 juillet 1989 (1989-07-19)

## Description

La présente invention a trait à un système de connexion entre batteries ou bancs de condensateurs associées à un circuit par exemple de type onduleur. Ces batteries sont composées de plusieurs condensateurs reliés par un bus formé de deux barres ou plaques minces conductrices de polarités différentes superposées et séparées par une couche isolante, selon la technologie dite des barres bus. De telles batteries peuvent évidemment être intégrées à des boîtiers de blocs dont la fonction est plus large, notamment des blocs onduleurs pour reprendre l'exemple cité ci-dessus.

La connexion entre plusieurs batteries de condensateurs peut en fait être envisagées comme la réalisation d'un circuit par addition de portions de circuits, laquelle peut produire une configuration globalement inductive, notamment du fait et au niveau des liaisons. Réaliser la connexion entre des blocs contenant de telles batteries, parce qu'elle conduit à une alternance de portions capacitives et de portions inductives, revient de fait à construire un circuit de type oscillant parcouru par des courants harmoniques parasites qui sont susceptibles d'affecter les condensateurs et de réduire leur durée de vie. EP0450122 divulgue une batterie de condesateurs à interconnections de faible inductance dans laquelle les interconnexions sont réalisées sous la forme d'un conducteur isolé en forme de ruban.

L'objectif d'un système de connexion appliqué à de tels montages doit donc principalement être de réduire lesdits courants et leurs oscillations éventuelles dans les condensateurs.

Certains types de connexion entre bancs capacitifs utilisées jusqu'ici consistent en des barres métalliques dont l'isolation est simplement obtenue par le maintien d'une distance entre les barres, sans qu'il n'y ait par conséquent d'autre isolant que la masse d'air qui se trouve entre elles.

Ces barres métalliques sont alors fixées par exemple par boulonnage sur des zones prévues à cet effet dans les conducteurs à raccorder. Cette technologie est cependant fortement inductive, et elle génère dès lors des oscillations qui sont préjudiciables à la pérennité des condensateurs.

Outre les problèmes de nature purement électrique mentionnés, les aspects mécaniques sont également importants dans la réalisation de ce type de connexion. Ainsi, compte tenu de l'importance des courants qui parcourent les barres conductrices, il est important que les pressions de contact des conducteurs de même polarité soient suffisantes et correctement réparties. Cela exige évidemment des moyens de serrage adéquats.

Ceux-ci devraient être conçus pour faciliter les opérations de construction d'une part, et de maintenance du système d'autre part. Pour satisfaire à ces objectifs, il est préférable que ces moyens de serrage soient prévus de telle sorte qu'ils soient aisément brochables / débrochables, en un temps réduit et sans faire appel à des pièces trop facilement dispersables.

Dans les dispositifs de connexion de l'art antérieur qui utilisent la technologie à barre bus laminée dont il a été question plus haut, c'est à dire regroupant deux conducteurs de type barres de polarités différentes séparées par un feuillet isolant, la liaison aux pièces à raccorder s'effectue jusqu'ici par des moyens de type vis/écrou, dont la débrochabilité n'est pas aisée. Elle implique en effet le démontage complet du boulon, ce qui n'est guère rapide et entraîne un risque de perte d'un des éléments.

L'objectif du système de connexion de l'invention répond aux différents inconvénients mentionnés auparavant, en proposant une solution technique qui est à la fois satisfaisante d'un point de vue électrique, c'est-à-dire principalement faiblement inductive, tout en proposant une brochabilité / débrochabilité facilitant autant que possible le travail des opérateurs. Cette solution est de plus réalisable à faible coût, ce qui la rend économiquement très intéressante.

A titre principal, le système de connexion de l'invention, permettant de relier des batteries ou bancs de condensateurs connectés à des barres bus laminées, se caractérise en ce que :
- chaque bus (5) présente au moins une excroissance (6) prévue pour coopérer avec un organe de liaison (C) entre deux excroissances issues de deux batteries ou bancs de condensateurs (4) adjacents ;
- l'organe de liaison comporte deux barrettes conductrices prévues pour être mises en contact chacune avec les barres de même polarité de deux excroissances en regard, ces barrettes étant disposées de part et d'autre d'une couche isolante ;
- l'une de l'excroissance (6) ou de chaque zone de coopération de l'organe de liaison (C) avec une excroissance (6) comporte une pince formant glissière permettant le positionnement de l'autre par coulissement perpendiculairement à l'axe de la liaison;
- des moyens de serrage / desserrage (12, 13, 14) permettent la fixation de l'organe de liaison à chaque excroissance, lesdits moyens restant en un seul ensemble au desserrage.

Cette nouvelle solution propose les avantages de la technologie à barre bus laminée, c'est-à-dire qu'il s'agit à titre essentiel d'une connexion à faible inductance, et elle permet de connecter et déconnecter très rapidement les blocs les uns des autres du fait de l'existence des glissières qui permettent d'insérer / retirer le système de l'invention après un simple desserrage tout en conservant les moyens de serrage en un seul ensemble. L'invention, comme on le verra dans la suite, n'utilise en outre que des pièces élémentaires à faible coût de production, rendant l'ensemble du système peu onéreux à fabriquer.

Selon une première configuration, chaque excroissance comporte une pince obtenue en écartant en les maintenant parallèles les barres du bus à l'extrémité de l'excroissance, la glissière ainsi constituée étant dimensionnée pour recevoir une zone de bordure d'un bloc d'allure parallélépipédique isolant dont une autre zone de bordure s'insère dans l'excroissance homologue en regard, ledit bloc étant relié via les moyens de serrage/desserrage aux deux barrettes de l'organe de liaison en appui sur les surfaces externes des pinces, lesdits moyens de serrage/desserrage étant localisés entre les pinces.

Dans cette variante, les moyens de serrage/desserrage font partie de l'organe de liaison, dont les deux barrettes et le bloc intermédiaire isolant constituent une structure en sandwich qui participe au coulissement et est conçue pour assurer une bonne pression de contact.

Dans cette hypothèse, de préférence, les moyens de serrage/desserrage consistent en au moins une vis traversant les barrettes et le bloc isolant, un canon isolant étant interposé entre ladite vis et au moins une barrette de l'organe de liaison ainsi que les barres des excroissances qu'elle relie.

Les vis des moyens de serrage/desserrage ne sont donc pas susceptibles de provoquer des courts-circuits.

Le serrage peut par exemple s'effectuer au moyen d'un boulon en appui sur la surface extérieure de l'autre barrette, ou par fixation dans un filetage de cette dernière.

Ce type de fixation, combiné au positionnement relatif et à la forme des pièces de l'organe de liaison, permettent un montage/démontage facile tout en assurant des contacts électriques performants.

Ces caractéristiques sont encore améliorées par le fait que, de préférence, les deux barrettes sont crantées ou dentelées sur leur surface en contact avec les barres des excroissances.

Pour que la partie centrale soit la plus limitée possible, il est par ailleurs avantageux que les moyens de serrage/desserrage consistent en deux vis disposées selon un axe perpendiculaire à la direction de la liaison.

Selon une configuration alternative, celle de l'excroissance ou de la zone de coopération de l'organe de liaison avec l'excroissance qui ne comporte pas de pince présente une découpe transversale pratiquée perpendiculairement à l'axe de la liaison, dans laquelle peuvent coulisser des moyens de serrage/desserrage associés à chaque pince.

Les moyens de serrage consistent alors aussi en une vis et un boulon, la vis traversant l'un des conducteurs de la pince via un orifice équipé d'un canon isolant, et le boulon étant coaxial et solidaire de l'autre conducteur, le canon isolant présentant une portion s'étendant dans la pince sur une longueur supérieure à l'épaisseur du conducteur au contact de celui de la pince que le canon traverse, cette portion s'insérant en fait dans la découpe transversale.

L'élément qui traverse les branches des pinces du système de connexion de l'invention est donc constitué de la tige de la vis, entouré au moins partiellement, dans le logement interne de ladite pince, par le canon d'isolation.

La découpe transversale permet non seulement le passage de la vis et du canon, mais également un montage / démontage facile par déplacement guidé dans la découpe après desserrage de la vis. Le boulon étant solidaire de l'une des branches de chaque pince, une action sur la tête de vis, par conséquent en un point unique, suffit à permettre le serrage / desserrage. Une rotation de quelques tours est au surplus suffisante, ce qui rend le montage / démontage très aisé et très rapide. L'ensemble de serrage / desserrage reste enfin assemblé, ce qui rend impossible toute perte de pièce, comme c'est d'ailleurs le cas dans la première configuration.

Le canon d'isolation comporte une portion de diamètre supérieure à l'orifice traversant le conducteur de la pince, dans laquelle prend appui la tête de vis, et qui permet de distribuer la pression de serrage sur une surface plus importante.

De préférence encore, la découpe transversale est prévue avec une longueur telle que lorsque le canon arrive en butée à son extrémité aveugle, l'organe de liaison est centrée, axialement, sur l'excroissance de chaque bus.

Cette découpe remplit donc en plus une fonction de positionnement en permettant le centrage immédiat de la patte de connexion dans l'axe des excroissances des bus dépassant des blocs capacitifs à relier.

La largeur de cette découpe est enfin prévue pour permettre le guidage en translation de l'organe de liaison/excroissance, en ce qu'elle est prévue faiblement supérieure au diamètre de la portion du canon d'isolation qui l'occupe. Le guidage qui en résulte facilite la tâche de l'opérateur notamment lors du montage, réduisant le temps de son intervention.

Dans l'invention, la pince peut se trouver sur l'excroissance, et la découpe se situe alors à l'extrémité de l'organe de liaison. L'inverse est également possible.

De préférence, selon une configuration possible, l'organe de liaison comporte une première barrette rectiligne plane et une seconde barrette dont les extrémités sont parallèles et décalées par rapport à la portion centrale accolée à la première barrette, délimitant deux logements formant pinces d'extrémité d'allure parallélépipédiques. Ceux-ci permettent de loger les excroissances des bus dépassant de batteries de condensateurs adjacentes à relier, de telle sorte que les surfaces externes desdites excroissances et les surfaces internes des barrettes soient pratiquement en contact avant serrage. Les moyens de serrage précités relient les deux branches des pinces d'extrémités.

Tous les éléments participant à la composition de ces deux configurations sont faciles à fabriquer, à partir de matériaux usuels, et en définitive productibles à faible coût.

La configuration géométrique de l'organe de liaison respecte la faible distance qui sépare les conducteurs de polarités "+" et "-", et permet de remplir l'objectif de faible inductivité de cette portion du circuit. La technologie barre bus laminée, qui caractérise le reste du circuit, est en fait généralisée à la conception desdits organes de l'invention.

L'invention va à présent être décrite plus en détails, en prenant comme exemple les deux configurations appliquées ci-dessus et en référence aux figures annexées, pour lesquelles :
- la figure 1 est une vue en perspective d'un module onduleur surmonté d'un banc de condensateurs électrolytiques ;
- la figure 2 en est une vue de dessus ;
- la figure 3 montre un système de connexion selon l'une des deux versions de la présente invention ;
- la figure 4 représente, en vue de dessus, la liaison de plusieurs modules à l'aide de systèmes de connexion selon la figure 3 ; et
- la figure 5 représente une vue en perspective éclatée d'une autre configuration possible de l'invention.

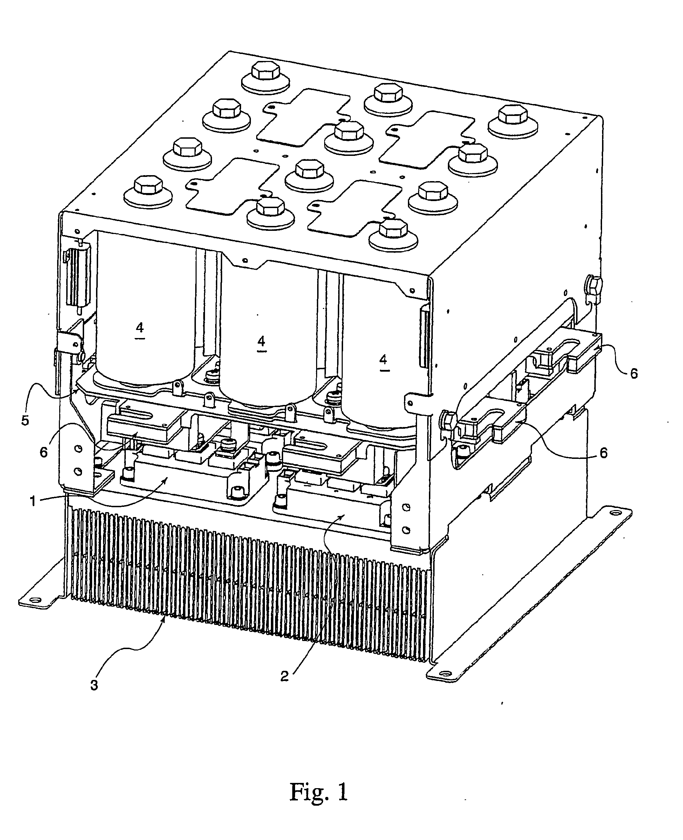

En référence à la figure 1, les modules IGBT (1) et (2) forment avec d'autres éléments réalisant un onduleur une couche médiane disposée entre un radiateur (3) permettant la dissipation de la chaleur et un bloc capacitif supérieur composé de condensateurs électrolytiques (4) soudés ou assemblés à une plaque d'allure plane formant barre bus (5). Cette dernière est par conséquent composée de deux barres plates conductrices de faible épaisseur reliées aux deux polarités différentes des condensateurs, et séparées par une couche isolante.

Ce bus bipolaire est muni, sur ses quatre côtés, d'excroissances (6) qui dépassent du volume du bloc capacitif et permettent la connexion du module onduleur à d'autres modules identiques.

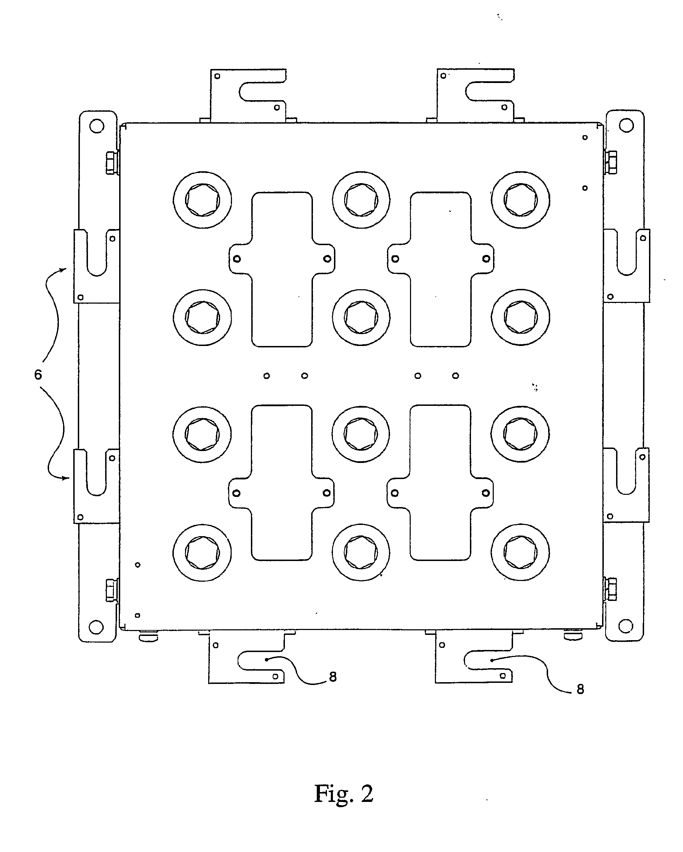

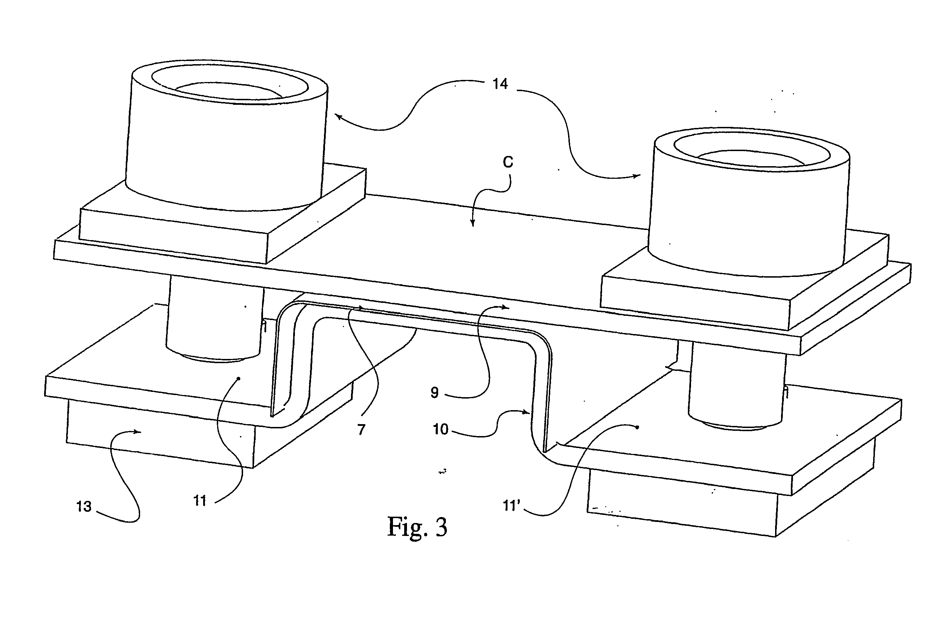

La figure 2 illustre de manière plus claire la forme des excroissances (6) dépassant de tous les côtés, qui sont munies d'une découpe en glissière latérale (8) permettant le positionnement des systèmes de connexion entre modules (voir figure 3), et coopèrent notamment avec les moyens de serrage desdits systèmes.

Dans l'exemple de module onduleur montré aux figures 1 et 2, la batterie de condensateurs comporte douze condensateurs (4) qui peuvent donc être reliés sur au moins un côté, via deux systèmes de connexion selon l'invention, à au moins une autre batterie comportant également douze condensateurs (4) électrolytiques.

Le système de connexion (C) apparaît plus précisément en figure 3. Il se compose, dans la configuration particulière illustrée dans cette figure, de deux barrettes conductrices (9) et (10) dont l'une est plate et rectiligne (la barrette 9) alors que l'autre (la barrette 10) comporte un créneau médian qui permet de décaler ses extrémités de telle sorte que le système de connexion (C) de l'invention présente finalement deux pinces opposées entre les branches desquelles s'ouvre un logement (11, 11') pour les excroissances (6) dépassant du bus (5). Une couche isolante (7) sépare les barrettes (9, 10) dans leur portion médiane.

Les logements (11, 11') sont traversés par des moyens de serrage constitués d'une vis (12), d'un boulon (13) et d'un canon isolant (14). Chaque boulon (13) est solidarisé à la barrette (10), et le serrage de la vis (12) aboutit par conséquent à rapprocher les deux branches de chaque pince. La tête de la vis (12) s'appuie sur une barrette (9) via une portion élargie du canon isolant (14), dont la fonction, outre de permettre cet appui et le guidage de la vis, consiste principalement à empêcher un court-circuit entre les deux barres du bus (5) d'une part, et les deux barrettes (9, 10) du système de connexion (C) de l'invention d'autre part.

Ce système de connexion (C) permet de maintenir à un niveau réduit l'inductance même lorsque plusieurs blocs capacitifs sont connectés les une aux autres. L'utilisation, dans ces connecteurs, d'une technologie qui reprend les principes essentiels de celle qui est employée dans les barres / bus à l'intérieur des blocs capacitifs permet cette connexion à faible inductance.

La partie de diamètre supérieur des canons de guidage (14) permet en plus de répartir la pression de contact entre la barrette (9) et la barre de l'excroissance (6) qui lui fait face et est en contact avec elle. Pour la barrette (10), une meilleure répartition de la pression est obtenue grâce à l'existence du boulon (13) qui lui est solidarisé. Les pinces d'extrémité et les moyens de serrage ont donc une action combinée qui permet un contact surfacique de bonne qualité avec les excroissances (6), pour les deux polarités.

Mécaniquement, la connexion / déconnexion se fait par action unique sur chaque tête de vis (12), par un serrage / desserrage limité très rapide et simple à effectuer. La vis, qui n'est jamais totalement démontée du boulon, est imperdable, ce qui constitue un avantage supplémentaire de l'invention.

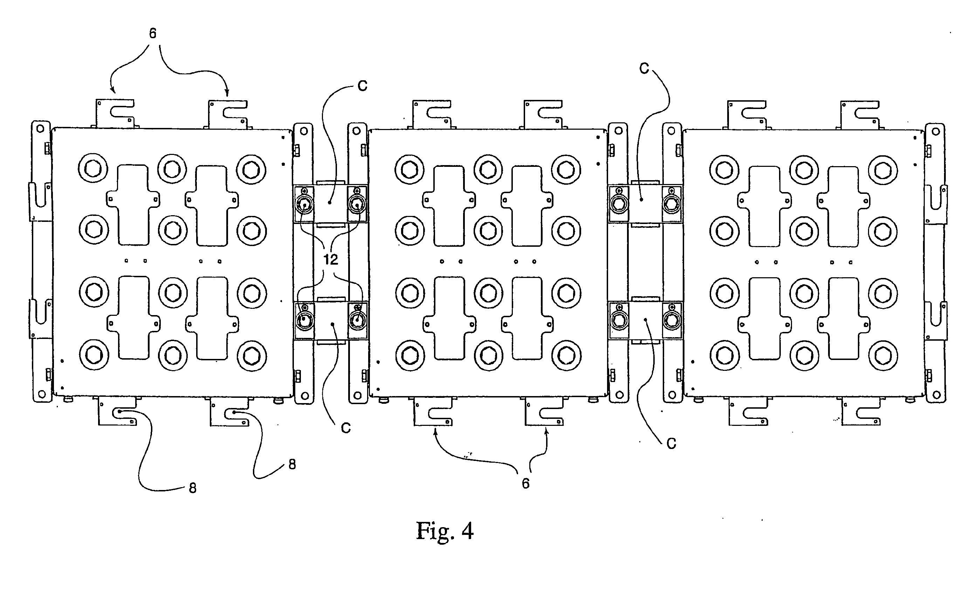

La figure 4 donne un exemple de connexion de plusieurs (trois) blocs onduleurs entre eux, à l'aide des systèmes de connexion (C) de l'invention fixés à chaque bloc à l'aide de deux vis (12). Compte tenu de l'existence des excroissances (6) sur les quatre côtés des blocs, de nombreuses configurations d'assemblage sont possibles. Le volume cubique des blocs onduleurs, qui présente une double symétrie par rapport à deux plans perpendiculaires, augmente encore le nombre de possibilités de configurations dans le plan.

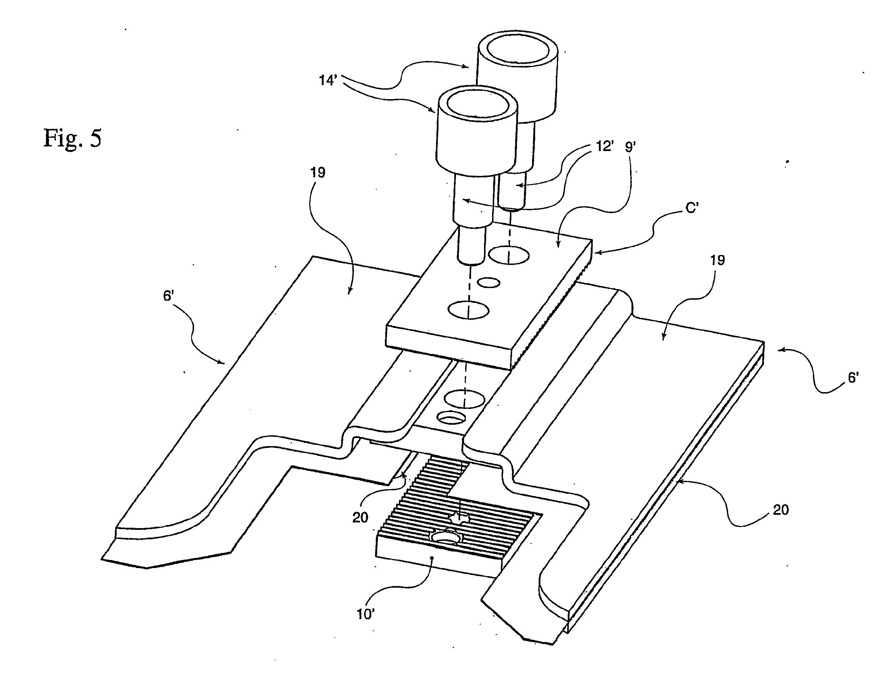

La figure 5 montre une autre possibilité de configuration, selon laquelle les pinces sont disposées aux extrémités des excroissances (6') dépassant des modules par exemple tels que montrés en figure 1.

Dans ce cas, les barres conductrices (19,20) du bus sont respectivement en escalier et plane, constituant une glissière d'extrémité dans laquelle peut coulisser un bloc isolant (7'). Les barrettes (9',10') du système de liaison (C') participent également au coulissement, lorsque les moyens de serrage sont en position lâche, c'est à dire desserrés et que les barrettes (9', 10') restant au contact des surfaces externes, respectivement supérieure (19) et inférieure (20) des excroissances (6').

Les moyens de serrage/desserrage, utilisant également des canons isolants (14'), sont identiques à ceux qui sont employés pour la version précédemment expliquée, et ne nécessitent par conséquent pas d'explications supplémentaires. Les vis (12') et les boulons, ces derniers non visibles, sont employés dans les mêmes conditions.

Selon une possibilité, les surfaces des barrettes (9', 10') au contact des barres (19, 20) du bus sont crantées pour assurer une bonne liaison tout en préservant une surface de contact correcte.

L'existence de ces deux configurations montre s'il en était besoin qu'il est possible ce concevoir de multiples variantes de forme sans se départir du domaine de la présente invention.

## Revendications

1. Système de connexion entre batteries ou bancs de condensateurs (4) associés à un circuit par exemple de type onduleur et dont les condensateurs (4) sont reliés par un bus (5) formé de deux barres minces conductrices de polarités différentes superposées et séparées par une couche isolante, **caractérisé en ce que** :
- chaque bus (5) présente au moins une excroissance (6, 6') prévue pour coopérer avec un organe de liaison (C, C') entre deux excroissances (6, 6') issues de deux batteries ou bancs de condensateurs (4) adjacents;
- l'organe de liaison comporte deux barrettes conductrices (9, 10 ; 9', 10') prévues pour être mises en contact chacune avec les barres de même polarité de deux excroissances (6, 6') en regard, ces barrettes (9, 10 ; 9', 10') étant disposées de part et d'autre d'une couche isolante (7, 7') ;
- l'une de l'excroissance (6, 6') ou de chaque zone de coopération de l'organe de liaison (C, C') avec une excroissance (6, 6') comporte une pince formant glissière permettant le positionnement de l'autre par coulissement perpendiculairement à l'axe de la liaison ;
- des moyens de serrage/desserrage (12, 13, 14) permettent la fixation de l'organe de liaison (C, C') à chaque excroissance (6, 6'), lesdits moyens restant en un seul ensemble au desserrage.

2. Système de connexion entre batteries de condensateurs (4) selon la revendication précédente, **caractérisé en ce que** chaque excroissance (6') comporte une pince obtenue en écartant en les maintenant parallèles les barres (19, 20) du bus à l'extrémité de l'excroissance (6'), la glissière ainsi constituée étant dimensionnée pour recevoir une zone de bordure d'un bloc (7') d'allure parallélépipédique isolant dont une autre zone de bordure s'insère dans l'excroissance (6') homologue en regard, ledit bloc (7') étant relié via les moyens de serrage/desserrage aux deux barrettes (9', 10') de l'organe de liaison (C') en appui sur les surfaces externes des pinces, lesdits moyens de serrage/desserrage étant localisés entre les pinces.

3. Système de connexion entre batteries de condensateurs (4) selon la revendication précédente, **caractérisé en ce que** les moyens de serrage/desserrage consistent en au moins une vis (12') traversant les barrettes (9', 10') et le bloc isolant (7'), un canon isolant (14') étant interposé entre ladite vis (12') et au moins une barrette (9') de l'organe de liaison (C') ainsi que les barres (19) des excroissances (6') qu'elle relie.

4. Système de connexion entre batteries de condensateurs (4) selon la revendication précédente, **caractérisé en ce que** le serrage s'effectue au moyen d'un boulon en appui sur la surface extérieure de l'autre barrette (20), ou par fixation dans un filetage de cette dernière.

5. Système de connexion entre batteries de condensateurs (4) selon l'une des revendications 3 et 4, **caractérisé en ce que** les moyens de serrage/desserrage consistent en deux vis (12') disposées selon un axe perpendiculaire à la direction de la liaison.

6. Système de connexion entre batteries de condensateurs (4) selon l'une quelconque des revendications 2 à 5, **caractérisé en ce que** les deux barrettes (9', 10') sont crantées ou dentelées sur leur surface en contact avec les barres (19, 20) des excroissances (6').

7. Système de connexion entre batteries de condensateurs (4) selon la revendication 1, **caractérisé en ce que** celle de l'excroissance (6) ou de la zone de coopération de l'organe de liaison (C) avec l'excroissance (6) qui ne comporte pas de pince présente une découpe transversale (8) pratiquée perpendiculairement à l'axe de la liaison, dans laquelle peuvent coulisser des moyens de serrage/desserrage (12, 14) associés à chaque pince.

8. Système de connexion entre batteries de condensateurs (4) selon la revendication précédente, **caractérisé en ce que** les moyens de serrage consistent en une vis (12) et un boulon (13), la vis (12) traversant l'un des conducteurs (9) de la pince via un orifice équipé d'un canon isolant (14), et le boulon (13) étant coaxial et solidaire de l'autre conducteur (10), le canon isolant (14) présentant une portion s'étendant dans la pince sur une longueur supérieure à l'épaisseur du conducteur au contact de celui de la pince que le canon (14) traverse, cette portion s'insérant dans la découpe (8) transversale.

9. Système de connexion entre batteries de condensateurs (4) selon la revendication précédente, caractérisé en ce le canon d'isolation (14) comporte une portion de diamètre supérieure à l'orifice traversant le conducteur de la pince, dans laquelle prend appui la tête de vis (12), et qui permet de distribuer la pression de serrage sur une surface plus importante.

10. Système de connexion entre batteries de condensateurs (4) selon l'une des revendications 8 et 9, **caractérisé en ce que** la découpe (8) transversale est prévue avec une longueur telle que lorsque le canon (14) arrive en butée à son extrémité aveugle, l'organe de liaison (C) est centré, axialement, sur l'excroissance (6) de chaque bus (5).

11. Système de connexion entre batteries de condensateurs (4) selon l'une des revendications 8 à 10, **caractérisé en ce que** la largeur de la découpe transversale (8) est prévue pour permettre le guidage en translation de l'organe de liaison (C) / excroissance (6) **en ce qu'**elle est prévue faiblement supérieure au diamètre de la portion du canon d'isolation (14) qui l'occupe.

12. Système de connexion entre batteries de condensateurs (4) selon l'une des revendications 7 à 11, **caractérisé en ce que** l'organe de liaison (C) comporte une première barrette (9) rectiligne plane et une seconde barrette (10) dont les extrémités sont parallèles et décalées par rapport à la portion centrale accolée à la première barrette (9), délimitant deux logements (11, 11') d'extrémité d'allure parallélépipédique permettant de loger les excroissances (6) des bus (5) dépassant des batteries de condensateurs (4) adjacentes, les surfaces externes des excroissances (6) et les surfaces internes des barrettes (9, 10) étant pratiquement en contact avant serrage.

## Claims

1. A connection system between batteries or banks of capacitors (4) associated with a circuit, for example of the inverter type and whereof the capacitors (4) are connected by a busbar (5) consisting of two thin bars of different polarities stacked and separated by an insulating layer, **characterized in that**
- each busbar (5) comprises at least one protuberance (6, 6') designed to cooperate with a linking member (C, C') between two protuberances (6, 6') derived from two batteries or banks of adjacent capacitors (4);
- the linking member comprises two conductive strips (9, 10; 9', 10') designed to be contacted each with the bars of same polarity of two opposite protuberances (6, 6'), said strips (9, 10; 9', 10') being arranged on either side of an insulating layer (7, 7');
- one of the protuberances (6, 6') or of each co-operating zone of the linking member (C, C') with one protuberance (6, 6') comprises a clamp forming a slide enabling the other to be slidingly positioned perpendicular to the axis of the link;
- clamping/releasing means (12, 13, 14) enable the linking member (C, C') to be fixed to each protuberance (6, 6'), said means being maintained as one single assembly upon release.

2. The connection system between capacitor batteries (4) according to the preceding claim, **characterized in that** each protuberance (6') includes a clamp obtained by spacing the bars (19, 20) away from the busbar at the end of the protuberance (6') while keeping them parallel, the slide thus formed being sized to receive an edge zone of an insulating parallelepiped block (7') whereof another edge zone fits into the opposite counterpart protuberance (6'), said block (7') being connected via the clamping/releasing means to the two strips (9', 10') of the linking member (C') bearing on the outer surfaces of the clamps, said clamping/releasing means being located between the clamps.

3. The connection system between capacitor batteries (4) according to the preceding claim, **characterized in that** the clamping/releasing means consist of at least one screw (12') passing through the strips (9', 10') and the insulating block (7'), an insulating bushing (14') being inserted between said screw (12') and at least one strip (9') of the connecting member (C') as well as the bars (19) of the protuberances (6') is connects.

4. The connection system between capacitor batteries (4) according to the preceding claim, **characterized in that** the clamping is done using a bolt bearing on the outer surface of the other strip (20), or by fastening in a thread of the latter part.

5. The connection system between capacitor batteries (4) according to one of claims 3 and 4, **characterized in that** the clamping/releasing means consist of two screws (12') arranged along an axis perpendicular to the direction of the connection.

6. The connection system between capacitor batteries (4) according to any one of claims 2 to 5, **characterized in that** the surface two strips (9', 10') in contact with the bars (19, 20) of the protuberances (6') is notched or serrated.

7. The connection system between capacitor batteries (4) according to claim 1, **characterized in that** that of the protuberance (6) or the cooperating zone between the linking member (C) with the protuberance (6) that does not have a clamp has a transverse cutout (8) formed perpendicular to the axis of the link, in which clamping/releasing means (12, 14) associated with each clamp can slide.

8. The connection system between capacitor batteries (4) according to the preceding claim, **characterized in that** the clamping means consist of a screw (12) and a bolt (13), the screw (12) passing through one of the conductors (9) of the clamp via an orifice equipped with an insulating bushing (14), and the bolt (13) being coaxial and secured to the other conductor (10), the insulating bushing (14) having a portion extending in the clamp over a length larger than the thickness of the conductor in contact with that of the clamp through which the bushing (14) passes, said portion being inserted in the transverse cutout (8).

9. The connection system between capacitor batteries (4) according to the preceding claim, **characterized in that** the insulating bushing (14) includes a portion with a diameter larger than the orifice passing through the conductor of the clamp, in which the screw head (12) bears, and which makes it possible to distribute the clamping pressure over a larger surface.

10. The connection system between capacitor batteries (4) according to one of claims 8 and 9, **characterized in that** the transverse cutout (8) is provided with a length such that when the bushing (14) abuts at its blind end, the linking member (C) is axially centered on the protuberance (6) of each busbar (5).

11. The connection system between capacitor batteries (4) according to one of claims 8 to 10, **characterized in that** the width of the transverse cutout (8) is provided to allow the translational guiding of the linking member (C)/protuberance (6) and **in that** it is provided to be slightly larger than the diameter of the portion of the insulating bushing (14) that occupies it.

12. The connection system between capacitor batteries (4) according to one of claims 7 to 11, **characterized in that** the linking member (C) includes a first flat rectilinear strip (9) and a second strip (10) whereof the ends are parallel and offset relative to the central portion alongside the first strip (9), defining two parallelepiped end housings (11, 11') making it possible to house the protuberances (6) of the busbars (5) protruding past the adjacent capacitor batteries (4), the outer surfaces of the protuberances (6) and the inner surfaces of the strips (9, 10) being practically in contact before clamping.

## Patentansprüche

1. Verbindungssystem zwischen Kondensatorsets oder -bänken (4), die mit einem Stromkreis beispielsweise vom Wechselrichtertyp verbunden sind und dessen Kondensatoren (4) durch einen Bus (5) verbunden sind, der von zwei dünnen leitenden Schienen verschiedener Polaritäten gebildet wird, die übereinanderliegen und von einer Isolierschicht getrennt sind, **dadurch gekennzeichnet, dass**:
- jeder Bus (5) mindestens eine Ausstülpung (6, 6') aufweist, die zur Zusammenarbeit mit einem Verbindungsorgan (C, C) zwischen zwei Ausstülpungen (6, 6') aus zwei benachbarten Kondensatorsets oder -bänken (4) vorgesehen ist,
- das Verbindungsorgan zwei leitende Leisten (9, 10; 9', 10') aufweist, die vorgesehen sind, um jeweils mit den Schienen derselben Polarität von zwei gegenüberliegenden Ausstülpungen (6, 6') in Kontakt gebracht zu sein, wobei diese Leisten (9, 10; 9', 10') auf der einen und anderen Seiten einer Isolierschicht (7, 7') angeordnet sind,
- eine der Ausstülpung (6, 6') oder jeder Kooperationszone des Verbindungsorgans (C, C') mit einer Ausstülpung (6, 6') eine Klemme, die eine Spannschiene bildet, aufweist, die die Positionierung der anderen durch Gleiten senkrecht zur Verbindungsachse erlaubt,
- Festspann-/Lösemittel (12, 13, 14), die die Befestigung des Verbindungsorgans (C, C') an jeder Ausstülpung (6, 6') erlauben, wobei die Mittel beim Lösen in einer einzigen Gruppe bleiben.

2. Verbindungssystem zwischen Kondensatorsets (4) nach vorangehendem Anspruch, **dadurch gekennzeichnet, dass** jede Ausstülpung (6') eine Klemme aufweist, die durch Abspreizen und paralleles Halten der Schienen (19, 20) des Busses am Ende der Ausstülpung (6') hergestellt wird, wobei die derart gebildete Spannschiene derart bemessen ist, um eine Randzone eines isolierenden parallelepipedischen Blocks (7') aufzunehmen, von dem eine andere Randzone in die entsprechende Ausstülpung (6') gegenüber einrastet, wobei der Block (7') über die Festspann-/Lösemittel mit den zwei Leisten (9', 10') des Verbindungsorgans (C) in Abstützung auf die Außenflächen der Klemmen verbunden ist, wobei die Festspann-/Lösemittel zwischen den Klemmen lokalisiert sind.

3. Verbindungssystem zwischen Kondensatorsets (4) nach vorangehendem Anspruch, **dadurch gekennzeichnet, dass** die Festspann-/Lösemittel aus mindestens einer Schraube (12') bestehen, die die Leisten (9', 10') und den isolierenden Block (7') durchquert, wobei zwischen der Schraube (12') und mindestens einer Leiste (9') des Verbindungsorgans (C') sowie den Schienen (19) der Ausstülpungen (6'), die sie verbindet, eine isolierende Muffe (14') zwischengestellt ist.

4. Verbindungssystem zwischen Kondensatorsets (4) nach vorangehendem Anspruch, **dadurch gekennzeichnet, dass** das Festspannen mit einem Bolzen durchgeführt wird, der sich auf der Außenfläche der anderen Leiste (20) abstützt oder durch Fixierung in einem Gewinde Letztgenannter.

5. Verbindungssystem zwischen Kondensatorsets (4) nach einem der Ansprüche 3 und 4, **dadurch gekennzeichnet, dass** die Festspann-/Lösemittel aus zwei Schrauben (12') bestehen, die gemäß einer Achse senkrecht zur Verbindungsrichtung angeordnet sind.

6. Verbindungssystem zwischen Kondensatorsets (4) nach einem der Ansprüche 2 bis 5, **dadurch gekennzeichnet, dass** die zwei Leisten (9', 10') auf ihrer Fläche, die mit den Schienen (19, 20) der Ausstülpungen (6') im Kontakt ist, geriffelt oder gezahnt sind.

7. Verbindungssystem zwischen Kondensatorsets (4) nach Anspruch 1, **dadurch gekennzeichnet, dass** das der Ausstülpung (6) oder der Kooperationszone des Verbindungsorgans (C) mit der Ausstülpung (6), das keine Klemme aufweist, einen transversalen Schritt (8) senkrecht zur Verbindungsachse aufweist, in dem die Festspann-/Lösemitel (12, 14) gleiten können, die jeder Klemme zugeordnet sind.

8. Verbindungssystem zwischen Kondensatorsets (4) nach vorangehendem Anspruch, **dadurch gekennzeichnet, dass** die Festspann-/Lösemittel aus einer Schraube (12) und einem Bolzen (13) bestehen, wobei die Schraube (12) einen der Leiter (9) der Klemme über eine Öffnung durchquert, die mit einer isolierenden Muffe (14) ausgestattet ist, und wobei der Bolzen (13) koaxial und mit dem anderen Leiter (10) verbunden ist, wobei die isolierende Muffe (14) einen Abschnitt aufweist, der sich in die Klemme über eine Länge erstreckt, die größer ist als die Dicke des Leiters im Kontakt mit dem der Klemme, den die Muffe (14) durchquert, wobei sich dieser Abschnitt in den transversalen Schnitt (8) einfügt.

9. Verbindungssystem zwischen Kondensatorsets (4) nach vorangehendem Anspruch, **dadurch gekennzeichnet, dass** die isolierende Muffe (14) einen Durchmesserabschnitt aufweist, der größer ist als die Öffnung, die den Leiter der Klemme durchquert, in der sich der Kopf der Schraube (12) abstützt und der es erlaubt, den Festspanndruck auf eine größere Fläche zu verteilen.

10. Verbindungssystem zwischen Kondensatorsets (4) nach einem der Ansprüche 8 und 9, **dadurch gekennzeichnet, dass** der transversale Schnitt (8) mit einer Länge vorgesehen ist, die derart ist, dass, wenn die Muffe (14) auf ihrem Blindende anschlägt, das Verbindungsorgan (C) axial auf der Ausstülpung (6) jedes Busses (5) zentriert ist.

11. Verbindungssystem zwischen Kondensatorsets (4) nach einem der Ansprüche 8 bis 10, **dadurch gekennzeichnet, dass** die Breite des transversalen Schnitts (8) vorgesehen ist, um die verschiebende Führung des Verbindungsorgans (C) / Ausstülpung (6) zu erlauben, indem sie etwas größer vorgesehen ist als der Durchmesser des Abschnitts der isolierenden Muffe (14), der sie belegt.

12. Verbindungssystem zwischen Kondensatorsets (4) nach einem der Ansprüche 7 bis 11, **dadurch gekennzeichnet, dass** das Verbindungsorgan (C) eine erste gerade ebene Leiste (9) aufweist und eine zweite Leiste (10), deren Enden parallel sind und im Verhältnis zum zentralen Abschnitt, der an der ersten Leiste (9) anliegt, versetzt, wobei dadurch zwei parallelepipedische Endaufnahmen (11, 11') begrenzt werden, die es erlauben, die Ausstülpungen (6) der Busse (5) aufzunehmen, die über die benachbarten Kondensatorensets (4) hinausragen, wobei die Außenflächen der Ausstülpungen (6) und die Innenflächen der Leisten (9, 10) vor dem Festspannen praktisch im Kontakt sind.
